# DEMANDE DE BREVET EUROPEEN

(11) **EP 3 846 046 A1**
(43) Date de publication de la demande: **07.07.2021**
(21) Numéro de dépôt: 20218019.6
(22) Date de dépôt: 31.12.2020
(51) Int. Cl.: G06F 16/215

(54) **PROCEDE ET SYSTEME DE TRAITEMENT DE DONNEES POUR LA PREPARATION D'UN JEU DE DONNEES**

(30) Priorité: 31.12.2019 FR 1915808
(71) Demandeur: BULL SAS, 78340 Les Clayes sous Bois (FR)
(72) Inventeur: SGHIOUER, Kaoutar, 60200 Compiègne (FR)
(74) Mandataire: Cabinet Camus Lebkiri

(57) **Abrégé**

L'invention porte sur un procédé (100) de traitement des données pour la préparation d'un jeu de données comprenant une unité de traitement de données recevant une première pluralité (2,3,4) de flux d'entrée de données pour préparer le jeu de données (5) en sortie, la pluralité de flux d'entrée de données et le jeu de données en sortie étant différent, ledit procédé comprenant :
- Une étape de standardisation (120) de la pluralité de flux d'entrée de données,
- Une étape d'encodage (130) des données normalisées,
- Une étape de prétraitement (140) des données manquantes,
- Une étape de transmission (190), d'un jeu de données prétraités.

L'invention concerne en outre un système de traitements des données, et un support d'enregistrement sur lequel est enregistré le programme de traitement de données.

## Description

L'invention concerne le domaine de l'analyse des données, et plus particulièrement le traitement des données pour la préparation d'un jeu de données, pouvant être utilisés notamment par la suite pour des phases de modélisation ou d'exploitation avancées des données. L'invention concerne un procédé de traitement des données pour la préparation d'un jeu de données ainsi qu'un système de traitement des données pour la préparation d'un jeu de données. L'invention se rapporte également à une unité de traitement de données pour la préparation d'un jeu de données.

### [Art antérieur]

Avec l'expansion des activités liées au Big Data, le métier de Data Scientist s'est développé de façon importante ces dernières années. Ce métier, qui a pour objet de tirer profit des grandes quantités de données disponibles dans les sociétés et les grandes organisations, s'appuie sur des techniques statistiques et des outils informatiques variés, mais reste aujourd'hui largement « artisanal ». Chaque organisation et chaque jeu de données posent des problèmes spécifiques auxquels les Data Scientists tentent de répondre par des solutions « sur mesure ».

Cet état de choses est notamment dû à la très grande hétérogénéité des données disponibles, à leur caractère souvent incomplet ainsi qu'aux erreurs et incohérences contenues dans presque tous les jeux de données de taille significative. Afin de prendre en compte ces aspects, les Data Scientists, avant de rentrer dans des phases de modélisation et d'exploitation avancée des données, doivent d'abord passer par une phase de prétraitement et d'analyse préliminaire de ces dernières (nettoyage, analyse exploratoire). Ces tâches s'avèrent cependant extrêmement lourdes et chronophages. Ainsi, comme le souligne l'étude menée par Forbes en 2016 et relayée dans l'article de G. PRESS, le Data Scientist passe 80% de son temps dans ce processus de prétraitement et d'analyse des données et 20% seulement dans l'algorithmique pure.

La phase de prétraitement et d'analyse préliminaire de données, représente une part considérable du travail des Data Scientists, qui repose aujourd'hui essentiellement sur la mise en oeuvre non automatisée et/ou systématisée de différents outils, et sans cadre fédérateur pour une comparaison aisée et pertinente des résultats obtenus sur un jeu de données suite à l'application de différentes techniques d'analyse.

En 2011, les travaux de S. KANDEL et al. ont donné lieu au développement de l'outil Wrangler, puis à la création de la société Trifacta qui développe un outil de prétraitement performant [KANDEL, 2011]. Néanmoins, cet outil permet uniquement de faciliter les traitements de type textuels (utilisation d'expressions régulières par exemple) ; exploiter les données issues des bases de données (éclatements, regroupements de colonnes, etc.) ; analyser syntaxiquement les messages.

Il est d'ailleurs comparé et évalué en termes de temps par rapport aux mêmes traitements effectués par Excel. De fait, il s'agit là uniquement d'un outil permettant de prétraiter des données brutes mais qui n'est aucunement capable d'effectuer des statistiques sur les données traitées. Précisément pour cette raison, les auteurs concluent dans leurs perspectives l'intérêt d'inclure d'autres techniques d'analyse, dont des techniques statistiques.

Le programme open source OpenRefine, développé par Google est notamment décrit par R. Verborgh et M. De Wilde [VERBORGH, 2013]. Cependant, il s'agit d'un outil permettant de traiter des données désordonnées, dans le but de les nettoyer et de les convertir d'un format à un autre. Dans ce cas également, l'outil ne réalise aucune analyse statistique des données injectées.

Le langage R permet de réaliser des calculs statistiques et également de développer des applications de Machine Learning. Il intègre de nombreux modules qui permettent au Data Scientist de réaliser facilement ce type de traitements ainsi que des prétraitements sur les données. Il permet ainsi : la manipulation des données, via de nombreuses bibliothèques de manipulation de données ; la visualisation de données, technique implémentée dans l'outil ggplot2 par exemple présenté par W. HADLEY [HADLEY, 2016]. Celui-ci permet de construire un ensemble d'objets géométriques » (« geoms ») à partir d'un jeu de données restreint. Cependant, il n'existe pas d'interface simple d'utilisation, autre que le langage de programmation lui-même, rapide et accessible permettant à n'importe quel utilisateur maîtrisant ou non le langage informatique de mettre en oeuvre des applications de Machine Learning.

Comme le langage R, le langage Python est très répandu dans le monde scientifique et dispose de librairies dédiées à l'analyse de données, notamment : Pandas , qui facilite la manipulation de données, par le biais de structures de données adaptées et d'opérations de nettoyage, de formatage ou d'autres prétraitements [MCKINNEY, 2011]; Scikit-learn (parfois abrégé sklearn), qui fournit différents algorithmes de classification, régression et partitionnement (en anglais, clustering) pour l'analyse statistique [PEDREGOSA, 2011].

Ainsi, il existe une multitude de solutions permettant de prétraiter les données impliquées dans des procédés d'apprentissage automatiques. Toutefois, selon les valeurs à traiter, les algorithmes ne se comportent pas de la même manière et cela influe sur le résultat qu'ils retournent. En effet, lorsque son degré de complexité d'analyse augmente, il existe un risque qu'un même jeu de données puisse être interprété différemment par plusieurs techniques qui fournissent alors des résultats divergents. Cette complexité d'analyse peut être due : à la volumétrie du jeu de données ; aux échantillons issus d'une même population pouvant être aléatoires ou manquants ; à des erreurs ou des incohérences contenues. Il devient alors indispensable de pouvoir juger de la pertinence des résultats fournis par les techniques d'analyses suite à leur application sur le jeu de données. De ce point de vue, il paraitrait nécessaire de disposer de méthodes ou d'outils permettant de comparer la pertinence des résultats des tests de chaque méthode.

De plus, il peut être fait le constat d'un manque d'outils capables de réaliser les tâches de prétraitement de manière automatisée/systématisée. En effet, les outils de l'art antérieur se limitent à des prétraitements très basiques des données (formatage, ajouts de colonnes, etc.), rendant leur utilisation chronophage. Il est donc nécessaire de développer des procédés et des systèmes moins chronophages que ceux existant, plus simple d'utilisation et automatisé et/ou systématisé et pouvant supporter une grande quantité de données ainsi que des données hétérogènes provenant par exemple de sources différentes.

Cela peut devenir critique lors de l'application de l'apprentissage automatisé à des processus industriels. En effet, dans des systèmes industriels, le fonctionnement des processus et plus largement la sécurité des systèmes d'information peut être contrôlée via un apprentissage automatisé se basant sur le suivi d'une pluralité de sources de données chacune nécessitant un traitement particulier. Or, dans ce contexte, il existe un risque important de sécurité et de fiabilité industrielle si les méthodes de traitement ne sont pas adaptées finement à chacun des jeux de données et éventuellement automatiquement modifiées dans le temps pour suivre l'évolution de ces données.

En effet, dans le cadre de l'utilisation industrielle de modèles prédictifs entrainés via des techniques d'apprentissage, l'apparition de nouvelles variables ou encore le changement de variables, au cours du temps, non prises en compte par le modèle prédictif utilisé rend bien souvent le modèle de prédiction obsolète. Le modèle prédictif sélectionné étant basé sur des lois de probabilité permettant d'interpréter un jeu de données, l'ajout, la suppression ou le changement de variables, non prises en compte par le modèle de prédiction nécessite bien souvent une refonte du modèle de prédiction bien souvent chronophage. Un modèle de prédiction n'étant plus adapté ne permettra donc pas d'anticiper l'apparition d'anomalies dans les processus industriels, telles que notamment des pannes ou des besoins en ressources dans le cadre de la maintenance prédictive d'infrastructures informatiques de calculs Haute-performance, la considération de données en tant que valeurs aberrantes ou bien caractéristiques d'une anomalie dans un jeu de données dans le cadre de une interprétation erronée d'un jeu de données dans le cadre de la cyber sécurité ou plus généralement de la surveillance permettant la détection d'attaques ou de fraudes.

Or, aucune solution existante ne permet de traiter automatiquement les jeux de données, notamment dans le cadre d'une application à des processus industriels. Il incombe donc à l'utilisateur d'analyser l'ensemble des résultats fournis par les différentes méthodes pour en tirer des conclusions et choisir le traitement lui semblant le plus correspondre au jeu de données étudié.

Enfin, les solutions de l'état de l'art sont peu accessibles, en s'inscrivant dans une logique « boîte noire ». Elles s'adressent prioritairement à des experts en Data Science, que ce soit : pour la réalisation de l'ensemble des étapes de prétraitement, ou pour l'interprétation/la compréhension des résultats obtenus suite aux tests de corrélation. Les outils n'expliquent donc pas à l'utilisateur pourquoi la corrélation entre une méthode d'analyse et un jeu de données a réussi ou échoué. Par ailleurs, certains outils nécessitent de connaître/maîtriser la programmation et les langages informatiques pour être manipulés.

### [Problème technique]

L'invention a donc pour but de remédier aux inconvénients de l'art antérieur. En particulier, l'invention a pour but de proposer un procédé de traitement des données pour la préparation d'un jeu de données, ledit procédé étant rapide et simple à mettre en œuvre, avec un nombre réduit d'étapes, permettant de maitriser la fiabilité et la pertinence du jeu de données traité tout en étant simple d'utilisation. En outre, un tel procédé est automatisé et systématisé permettant une application aisée à tout processus industriel. Ce procédé est également accessible pour n'importe quel utilisateur tout en étant apte à supporter une grande quantité de données dont lesdites données peuvent être hétérogènes. En outre, il est particulièrement adapté à la surveillance de processus industriels et plus particulièrement de système d'information.

L'invention a en outre pour but de proposer un système de traitement des données pour la préparation d'un jeu de données, ledit système étant simple et rapide d'utilisation. En outre, le système selon l'invention est accessible et capable de traiter un volume important de données. Le système selon l'invention permet également de maîtriser la fiabilité et la pertinence des données.

### [Brève description de l'invention]

A cet effet, l'invention porte sur **un procédé de traitement des données** pour la préparation d'un jeu de données mis en oeuvre par un dispositif informatique comprenant une unité de traitement de données, ladite unité de traitement de données recevant une pluralité de flux d'entrée de données provenant de fournisseurs de données différents, et comprenant un groupe de module interconnectés de traitement que traverse la première pluralité de flux de données pour préparer le jeu de données en sortie, la pluralité de flux d'entrée de données et le jeu de données en sortie étant différent, ledit procédé comprenant :
- Une étape de standardisation de la pluralité de flux d'entrée de données, par un module d'analyse descriptive de données, à partir de la pluralité de flux d'entrée de données, permettant de normaliser les données à l'entrée de l'unité de traitement,
- Une étape d'encodage des données normalisées, par le module d'analyse descriptive des données, permettant de transformer la pluralité de flux d'entrée de données normalisées en une pluralité de flux d'entrée de données normalisées et chiffrées,
- Une étape de prétraitement du jeu de données, par un module de traitement de données, à partir de la pluralité de flux d'entrée de données normalisées et chiffrées, ladite étape de prétraitement comprenant :
   ∘ Une étape d'augmentation des données pour la complétion des données manquantes prenant en compte la cohérence des données normalisées et chiffrées avec des tables de corrélation prédéfinies,
   ∘ Une étape de suppression de valeurs aberrantes de la pluralité de flux d'entrée de données normalisées et chiffrées, par le traitement par des fonctions prédéterminées desdites données normalisées et chiffrées,
   ∘ Une étape de vérification de l'adéquation de la pluralité de flux d'entrées de données traitées avec les fonctions prédéterminées, ladite étape de vérification comprenant la rétroaction par le module de traitement de données pour prendre des actions visant à injecter à nouveau la pluralité de flux d'entrée de données traitées dans le module de traitement de données lorsque l'adéquation de la pluralité de flux d'entrées de données traitées avec les fonctions prédéterminées est divergente,
- Une étape de transmission d'un jeu de données prétraitées, ledit jeu de données comportant des données normalisées et chiffrée ainsi que de nouvelles données générées lors de l'étape d'augmentation des données et de préférence de nouvelles données venant en remplacement de valeurs aberrantes.

Dans le cadre de la quatrième révolution industrielle, les modèles d'apprentissage automatique sont de plus en plus utilisés pour résoudre divers problèmes techniques rencontrés lors de la mise en oeuvre de processus industriels. Alors que la préparation des jeux de données a souvent été considéré comme une étape présentant peu d'enjeux, il parait clair maintenant que la valeur d'une prédiction générée par un modèle d'apprentissage sera directement corrélée à la qualité des jeux de données utilisés pour l'entrainement d'un modèle d'une part mais aussi en production pour la génération de la prédiction d'autre part.

En outre, de façon à renforcer la confiance que nous pouvons avoir dans les prédictions générées par des modèles d'apprentissage, il parait essentiel de contrôler la génération des jeux de données d'entrainement et de test. Or, aucune solution existante ne permet de traiter automatiquement les jeux de données, notamment dans le cadre d'une application à des processus industriels. Il incombe donc à l'utilisateur de traiter l'ensemble des résultats fournis par les différentes méthodes pour en tirer des conclusions et choisir le traitement lui semblant le plus correspondre au jeu de données étudié.

Ainsi, les inventeurs ont développé un procédé de traitement automatisé des données permettant de réaliser de façon automatique des étapes d'encodage des données normalisées permettant de transformer la pluralité de flux d'entrée de données normalisées en une pluralité de flux d'entrée de données normalisées et chiffrées. En outre, le procédé permet de détecter des valeurs aberrantes par comparaison à des fonctions prédéterminées, d'augmenter les données pour la complétion des données manquantes prenant en compte la cohérence des données avec des tables de corrélation prédéfinies et enfin de vérifier l'adéquation de la pluralité de flux d'entrées de données traitées avec des fonctions prédéterminées. Ainsi, en autonomie, sur la base de tables de corrélation prédéfinies et de fonctions prédéterminées, le procédé de traitement de l'invention permet, à partir de données très diverses, de générer un jeu de données prétraité. Un tel jeu de données prétraité automatiquement peut ensuite être utilisé lors de la mise en œuvre d'un modèle d'apprentissage dédié à la surveillance d'un processus industriel.

**Selon d'autres caractéristiques optionnelles du procédé, ce dernier peut inclure facultativement une ou plusieurs des caractéristiques suivantes, seules ou en combinaison** :
- L'étape de traitement des valeurs aberrantes de la pluralité de flux d'entrée de données normalisées et chiffrées comporte une comparaison à des fonctions prédéterminées en fonction de seuils prédéterminés minimum et maximum.
- L'étape d'augmentation des données comporte une interpolation pour la complétion des données manquantes prenant en compte la cohérence des données avec des tables de corrélation prédéfinies.
- L'étape de vérification de l'adéquation de la pluralité de flux d'entrées de données traitées avec des fonctions prédéterminées comprenant la rétroaction pour le module de traitement de données pour prendre des actions visant à injecter à nouveau la pluralité de flux d'entrée de données traitées dans le module de traitement de données lorsque l'adéquation de la pluralité de flux d'entrées de données traitées avec les fonctions prédéterminées est divergente.
- les fournisseurs de données comportent des capteurs de production industrielle et le jeu de données prétraitées est utilisé par un modèle d'apprentissage automatique entrainé pour la surveillance d'un processus industriel.
- les capteurs de production industrielle comportent : des objets connectés, des capteurs machines, capteurs d'environnement et/ ou des sondes informatiques.
- le processus industriel est sélectionné parmi : un processus de production agroalimentaire, un processus de production manufacturière, un processus de synthèse chimique, un processus de conditionnement ou un processus de surveillance d'une infrastructure informatique.
- la surveillance du processus industriel correspond à la surveillance de la sécurité du processus industriel et comporte en particulier une maintenance prédictive, une détection de défaillance, une détection de fraude, et/ou une détection de cyberattaque. La maintenance prédictive permet à des utilisateurs de réagir, grâce à une alerte du procédé, avant la survenue d'une défaillance sur l'installation à partir de signaux faibles. La détection de défaillance peut correspondre à la détection d'une étape d'un procédé présentant une déviation par rapport au comportement normale ou à un défaut dans un dispositif. La détection de fraude peut correspondre par exemple à l'identification de consommation anormale d'une ressource dans un système de distribution de ressources tandis que la détection d'une cyberattaque permet de détecter et prévenir une intrusion généralement extérieure au système.
- il comporte une étape de modification automatique des fonctions prédéterminées et/ou des tables de corrélation prédéfinies, respectivement utilisées pour les étapes de suppression de valeurs aberrantes et d'augmentation des données.
- le jeu de donnée prétraité est utilisé comme données d'entrée d'un modèle d'apprentissage entrainé pour la surveillance d'un processus industriel et l'étape de modification automatique est initiée lorsqu'une variance est identifiée dans la pluralité de flux d'entrée de données. En particulier la variance correspond à l'ajout d'un nouveau flux d'entrée ou à la modification de la forme des données d'un flux d'entrée déjà pris en considération.
- il comporte une étape de détermination de la qualité des données du jeu de données, comprenant la détermination d'un indicateur de fiabilité et d'un indicateur de validité, par un moyen systématique de transformation. Cela permet de déterminer aussi la pertinence du résultat du modèle. Si tu donnes de mauvaises données la fiabilité de la prédiction sera faible.
- lorsque l'indicateur de fiabilité et l'indicateur de validité sont respectivement inférieurs à une valeur prédéterminée, les données du jeu de données sont réinjectées dans l'unité de traitement de données, par un module d'injection de données.
- il comprend une étape préalable d'acquisition de chaque flux d'entrée de données, par un module de commande d'entrée, à partir d'un magasin de stockage de données, dont le format est immédiatement utilisable par l'unité de traitement de données.
- il comprend une étape d'affichage, par un module de communication, des étapes du traitement de données, des corrélations de données, des fonctions prédéterminées sélectionnées, de la cohérence des données avec les tables de corrélations prédéfinies, de l'adéquation de la pluralité de flux d'entrées de données traitées avec des fonctions prédéterminées.
- il comprend une étape de vérification selon un ensemble de règles déterminées, à la sortie de modules interconnectés de traitement que traverse la pluralité de flux de données pour préparer le jeu de données, comprenant des filtres, chacun étant prévu à la sortie de modules interconnectés de traitement.
- il comprend une étape de sélection d'une fonction prédéterminée pour laquelle l'adéquation, entre ladite fonction prédéterminée et un flux de données de la pluralité de flux d'entrée de données, présente la divergence la plus faible, par le module de prétraitement de données.
- il comprend une étape de génération d'une évaluation des données, par un module d'évaluation, ladite étape comportant la comparaison d'indices de corrélation pour chacun des sous-ensembles de données et l'identification, pour chacun des sous-ensembles de données, des fonctions de distribution prédéterminées permettant une corrélation supérieure à un seuil prédéterminé.
- l'étape d'encodage des données comprend :
   - l'identification des données à encoder,
   - la modification des données identifiées en données encodées, et
   - la mémorisation des données encodées.
- La complétion des données manquantes, comprend en outre une étape de classification des données manquantes, par le module de traitement de données.

L'invention porte en outre sur **un système de traitement des données** pour la préparation d'un jeu de données mis en œuvre par un dispositif informatique, recevant une pluralité de flux d'entrée de données provenant de fournisseurs de données différents, le dispositif informatique comprenant une unité de traitement de données et comprenant un groupe de module interconnectés de traitement que traverse la première pluralité de flux de données pour préparer le jeu de données en sortie, la pluralité de flux d'entrée de données et le jeu de données en sortie étant différents, ladite unité de traitement de données comprenant :
- Un module d'analyse descriptive de données, configuré pour
   - à partir de la pluralité de flux d'entrée de données, standardiser les données à l'entrée de l'unité de traitement, et
   - transformer la pluralité de flux d'entrée de données normalisées en une pluralité de flux d'entrée de données normalisées et chiffrées,
- Un module de traitement de données, configuré pour, à partir de la pluralité de flux d'entrée de données normalisées et chiffrées :
   - la complétion des données manquantes prenant en compte la cohérence des données normalisées et chiffrées avec des tables de corrélation prédéfinies,
   - supprimer des valeurs aberrantes de la pluralité de flux d'entrée de données normalisées et chiffrées, par le traitement par des fonctions prédéterminées desdites données normalisées et chiffrées,
   - vérifier l'adéquation de la pluralité de flux d'entrées de données traitées avec les fonctions prédéterminées, prenant des actions visant à injecter à nouveau la pluralité de flux d'entrée de données traitées dans le module de traitement de données lorsque l'adéquation de la pluralité de flux d'entrées de données traitées avec les fonctions prédéterminées est divergente,
- Un moyen d'éjection de données configuré pour transmettre le jeu de données prétraité, ledit jeu de données comportant des données normalisées et chiffrées ainsi que de nouvelles données générées et de préférence de nouvelles données venant en remplacement de valeurs aberrantes à partir de la pluralité de flux d'entrée de données traitées par l'unité de traitement de données.

L'invention porte en outre sur **une unité de traitement de données** pour la préparation d'un jeu de données mis en œuvre par un dispositif informatique, recevant une pluralité de flux d'entrée de données provenant de fournisseurs de données différents, et comprenant un groupe de module interconnectés de traitement que traverse la pluralité de flux d'entrée de données pour préparer le jeu de données en sortie, la pluralité de flux d'entrée de données et le jeu de données en sortie étant différents, ladite unité de traitement comprenant :
- Un module d'analyse descriptive de données, configuré pour
   - à partir de la pluralité de flux d'entrée de données, standardiser les données à l'entrée de l'unité de traitement, et
   - transformer la pluralité de flux d'entrée de données normalisées en une pluralité de flux d'entrée de données normalisées et chiffrées,
- Un module de traitement de données, configuré pour, à partir de la pluralité de flux d'entrée de données normalisées et chiffrées :
   - la complétion des données manquantes prenant en compte la cohérence des données normalisées et chiffrées avec des tables de corrélation prédéfinies,
   - supprimer des valeurs aberrantes de la pluralité de flux d'entrée de données normalisées et chiffrées, par le traitement par des fonctions prédéterminées desdites données normalisées et chiffrées,
   - vérifier l'adéquation de la pluralité de flux d'entrées de données traitées avec les fonctions prédéterminées, prenant des actions visant à injecter à nouveau la pluralité de flux d'entrée de données traitées dans le module de traitement de données lorsque l'adéquation de la pluralité de flux d'entrées de données traitées avec les fonctions prédéterminées est divergente,
- Un moyen d'éjection de données configuré pour transmettre le jeu de données prétraité, ledit jeu de données comportant des données normalisées et chiffrées ainsi que de nouvelles données générées et de préférence de nouvelles données venant en remplacement de valeurs aberrantes à partir de la pluralité de flux d'entrée de données traitées par l'unité de traitement de données.

L'invention porte en outre sur **un programme de traitement de données** pour la préparation d'un jeu de données comprenant des instructions qui, lorsqu'elles sont exécutées par une unité de traitement de données selon l'invention, provoquent la mise en œuvre d'un procédé de traitement de données selon l'invention.

L'invention porte en outre sur **un support d'enregistrement** sur lequel est enregistré le programme de traitement de données selon l'invention.

D'autres avantages et caractéristiques de l'invention apparaitront à la lecture de la description suivante donnée à titre d'exemple illustratif et non limitatif, en référence aux Figures annexées :
La figure 1 représente un schéma d'un mode de réalisation d'un système selon l'invention.
La figure 2 représente un schéma d'un mode de réalisation du procédé selon l'invention.
La figure 3 représente un schéma d'un mode de réalisation d'une étape du procédé selon l'invention.
La figure 4 représente un schéma d'un mode de réalisation du procédé selon l'invention.

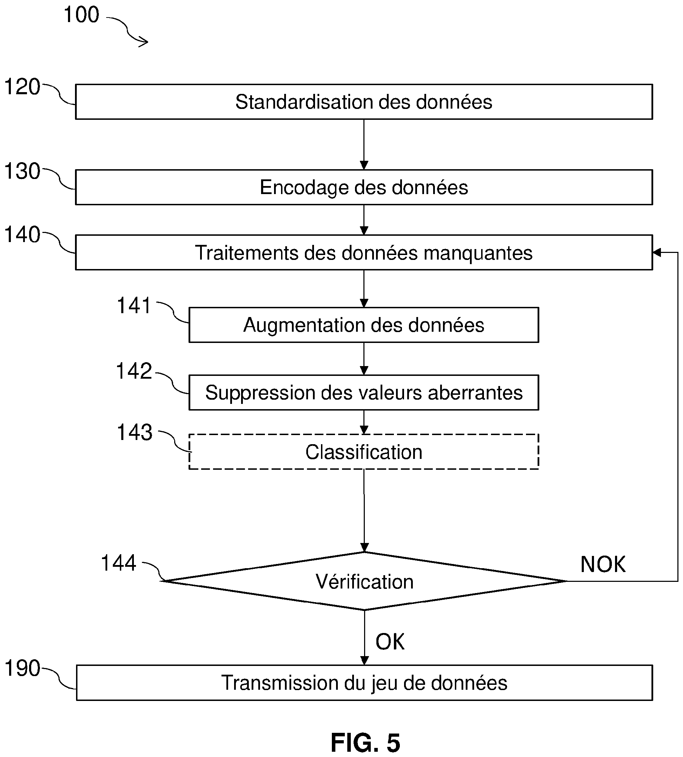

La figure 5 représente un schéma d'un mode de réalisation du procédé selon l'invention.

### [Description de l'invention]

L'expression « **passage en anomalie** » au sens de l'invention, peut correspondre à un instant où une métrique ou une pluralité de métriques (liées entre elles ou non) présentent un risque ou un résultat obtenu par calcul, de dépassement d'un seuil prédéterminé ou indicatif d'un risque de défaillance ou d'incident technique sur l'infrastructure informatique.

L'expression « **incident technique** » ou le terme « **défaillance** » au sens de l'invention, correspondent à un ralentissement ou un arrêt de fonctionnement d'une partie au moins de l'infrastructure informatique et de ses applications. Un incident technique peut être causé par une erreur réseau, un échec de processus ou encore une défaillance d'une partie du système.

L'expression « **indicateur de performance** » ou « métrique » au sens de l'invention, correspond à une propriété technique ou fonctionnelle d'un ou de plusieurs éléments d'une infrastructure informatique ou de son environnement représentant les conditions ou l'état de fonctionnement de ladite infrastructure informatique. En outre, un indicateur de performance peut correspondre à une combinaison de propriétés ou à des transformations mathématiques de propriétés. Par exemple, un indicateur de performance peut correspondre à la dérivée d'une propriété d'un élément de l'infrastructure informatique ou bien à un rapport entre les propriétés de deux éléments de l'infrastructure informatique.

On entend par « **dispositif informatique** » tout dispositif informatique ou toute infrastructure informatique comprenant une ou plusieurs ressources matérielles et/ou logicielles configurées pour envoyer et/ou recevoir des flux de données et pour les traiter. Le dispositif informatique peut être un serveur informatique.

L'expression « valeur de **l'indicateur de performance** » ou « valeur de la métrique » au sens de l'invention, correspond à une valeur de mesure ou de calcul d'une propriété technique ou fonctionnelle d'un ou de plusieurs éléments d'une infrastructure informatique représentant l'état de fonctionnement de ladite infrastructure informatique.

L'expression « **capteurs de production industrielle** » au sens de l'invention peut correspondre à des objets connectés. Les capteurs de production industrielle pourront en particulier correspondre à des capteurs machines, dédié à la mesure de données relative à des machines, de préférence des machines de production telles que des machines industrielles. Ainsi, les capteurs de production industrielles pourront générer des données exprimées en vitesse (e.g. tours par minute), cadence, poids ou tout autres unités utiles dans un contexte industriel. Les capteurs de production industrielle pourront aussi correspondre à des capteurs d'environnement capables par exemple de mesure la température, la pression l'humidité. Les capteurs de production industrielle pourront en particulier correspondre à des sondes informatiques.

On entend par « **Fournisseurs de données** », tout capteurs (tels que des capteurs de production industrielle), sondes (telles que des sondes informatiques) ou programmes informatiques capables de générer des données de suivi de processus industriels. Ils peuvent aussi correspondre à des dispositifs informatiques tels que des serveurs gérant les données générées par des capteurs, des sondes ou des programmes informatiques.

L'expression « **processus industriels** » au sens de l'invention peut correspondre à un processus de production de biens de consommation pouvant par exemple être des objets électroniques, des objets mécaniques, des aliments, ou encore substances pharmaceutiques ou phytopharmaceutiques. En outre, un processus industriel pourra être contrôlé par l'intermédiaire d'une infrastructure informatique. Ainsi une surveillance d'un processus industriel pourra correspondre à la surveillance d'une infrastructure informatique.

Le terme « **apprentissage** » au sens de l'invention correspond à un procédé conçu pour définir une fonction f permettant de calculer une valeur de Y à partir d'une base de n observations labelisées (X1...n, Y1...n) ou non labelisées (X1...n). L'apprentissage peut être dit supervisé lorsqu'il se base sur des observations labelisées et non supervisé lorsqu'il se base sur des observations non labelisées. Dans le cadre de la présente invention, l'apprentissage est avantageusement utilisé pour la calibration du procédé et donc son adaptation à une infrastructure informatique particulière.

Le terme « **modèle** » **ou « modèle d'apprentissage automatique** » ou « **règle** » ou **« algorithme** » au sens de l'invention peut par exemple correspondre à une suite finie d'opérations ou d'instructions permettant de calculer une valeur par l'intermédiaire d'un classement ou d'un partitionnement des données au sein de groupes préalablement définis Y et d'attribuer un score ou de hiérarchiser une ou plusieurs données au sein d'un classement. La mise en œuvre de cette suite finie d'opérations permet par exemple d'attribuer une étiquette Y à une observation décrite par un ensemble de caractéristiques ou paramètres X grâce par exemple à la mise en œuvre d'une fonction f susceptible, de reproduire Y ayant observé X. Y = f (X) + e où e symbolise le bruit ou erreur de mesure.

L'expression « **infrastructure informatique** » au sens de l'invention correspond à un ensemble de structures informatiques (i.e. dispositifs informatiques) apte à faire fonctionner une application ou une chaine applicative. L'infrastructure informatique peut être un ou plusieurs serveurs, ordinateurs, ou encore comporter des contrôleurs industriels. Ainsi, l'infrastructure informatique peut correspondre à un ensemble de d'éléments comportant un processeur, une interface de communication et de la mémoire.

Par « **sonde** » ou « **sonde informatique** », on entend au sens de l'invention un dispositif, logiciel ou processus associé à un équipement qui permet d'effectuer, de gérer et/ou de faire remonter vers un équipement informatique des mesures des valeurs d'indicateurs de performance tels que des paramètres d'un système. Cela peut correspondre au sens large à des valeurs sur l'utilisation de ressources, des valeurs de paramètres d'exécution d'applications ou encore des valeurs de l'état de fonctionnement des ressources. Une sonde selon l'invention englobe donc également les logiciels ou processus capable de générer des journaux applicatifs ou des historiques des événements (« log file » en terminologie anglosaxonne). En outre, les sondes peuvent aussi correspondre à des capteurs physiques tels que des capteurs de température, d'humidité, de fuites d'eau, de consommation électrique, de mouvement, d'air conditionné, et de fumée.

On entend par « **traiter** », « **calculer** », « **déterminer** », « **afficher** », « **extraire** » « **comparer** » ou plus largement « **opération exécutable** » au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Le terme « **ressource** » au sens de l'invention correspond à des paramètres, des capacités ou des fonctions de dispositifs informatiques permettant le fonctionnement d'un système ou d'un processus applicatif. Un même dispositif informatique est associé généralement à plusieurs ressources. De même, une même ressource peut être partagée entre plusieurs processus applicatifs. Une ressource est généralement associée à un identifiant unique permettant de l'identifier au sein d'une infrastructure informatique. Par exemple, le terme « ressource » peut inclure : des disques réseaux caractérisés par des indicateurs de performance tels que par exemple par leurs entrées/sorties, la lecture/écriture sur des disques, des mémoires caractérisées par un indicateur de performance tel que le taux d'utilisation, un réseau caractérisé par sa bande passante, un processeur caractérisé par exemple par son utilisation (en pourcent) ou le taux d'occupation de ses caches, une mémoire vive caractérisée par la quantité allouée. On entend par « **utilisation des ressources** », la consommation d'une ressource par exemple par une application métier.

On entend par « **seuil prédéterminé** » au sens de l'invention une valeur maximale de paramètre associée à chaque ressource permettant un bon fonctionnement de ladite ressource. Par exemple, cela correspond aux limites maximales acceptables de consommations de ressources pour une infrastructure informatique hébergeant une ou plusieurs briques applicatives. Ces limites peuvent être réelles ou hypothétiques et correspondent généralement à un niveau d'utilisation au-delà duquel des dysfonctionnements peuvent survenir et ayant pour conséquence un arrêt de la ressource, de l'infrastructure informatique ou bien à tout le moins des baisses de qualités de service. Par exemple, le tableau 1 ci-dessous présente les seuils prédéterminés d'utilisation maximum pour trois ressources.

Par « **règles d'exécution** » on entend au sens de l'invention des paramètres prédéterminés d'exécution d'un plan d'ordonnancement dont le respect permet une exécution répondant aux besoins de l'administrateur SI. Ces règles peuvent notamment inclure des ordres d'enchainement à respecter, des horaires à respecter, ou des seuils de consommation en ressources à respecter, des fonctions prédéterminées à utiliser.

L'expression « **objet connecté** » au sens de l'invention, correspond à un objet électronique connecté, par une connexion filaire ou sans fil, à un réseau de transport de données, de manière que l'objet connecté puisse partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des tablettes, des dispositifs d'éclairage intelligents, des outils industriels ou encore des smartphones.

Dans la suite de la description, les mêmes références sont utilisées pour désigner les mêmes éléments.

Comme cela a été mentionné, l'apprentissage automatisé constitue une part majeure de la quatrième révolution industrielle. Ainsi, les processus industriels sont de plus en plus fréquemment améliorés via une intégration d'intelligence artificielle ou plus spécifique de modèles d'apprentissages automatisés capables de répondre à des problèmes techniques aussi variés qu'il y a de processus industriels.

En particulier, l'apprentissage automatisé se base sur une multitude de données pouvant provenir de plusieurs sources différentes et pouvant présenter ainsi une forte hétérogénéité. Ainsi, avec les méthodes de l'art antérieur, il est fréquent qu'une équipe de data scientistes soit formée au traitement des données et mette en place des processus de traitement de données. Néanmoins, lorsque des sources des données sont diverses et varient dans le temps les méthodes de l'art antérieur ne sont pas réactives et peuvent causer des arrêts d'exploitation des processus industriels. En effet, lorsque l'apprentissage automatisé est utilisé pour le contrôle de processus industriel, un prétraitement non adapté de cette multitude de source de données peut entrainer une diminution de la réactivité des processus de contrôle ou pire un manque de sensibilité.

Cela peut engendrer des risques pour les processus industriels contrôlés mais également pour les personnes travaillant au contact de ces processus industriels. Pour éviter ces problèmes techniques d'arrêt d'exploitation des processus industriels, les inventeurs ont développé de nouveaux processus automatisés pour le traitement de jeux de données provenant de plusieurs fournisseurs de données.

En particulier, comme cela sera détaillé par la suite, les inventeurs ont développé des dispositif, système et procédé de traitement de données pour la préparation d'un jeu de données destiné à être utilisé par un modèle d'apprentissage. Avantageusement, un dispositif, système ou un procédé de traitement de données selon l'invention permettront de préparer un jeu de données pour l'entrainement d'un modèle d'apprentissage automatisé mais également comme données d'entrée permettant une prédiction par le modèle d'apprentissage automatisé sur la base de ces données de test prétraitées.

Pour cela, les inventeurs ont donc proposé un procédé de traitement de données pour la préparation d'un jeu de données permettant d'analyser l'ensemble des résultats fournis par les différentes méthodes afin d'aider l'utilisateur à choisir l'interprétation lui semblant la plus correspondre au jeu de données étudié.

En particulier, les inventeurs proposent un procédé, un système et un dispositif capables de préparer un jeu de données à partir d'une pluralité de flux d'entrée de données provenant de plusieurs fournisseurs différents. En effet, au sein d'un système complexe (par exemple un processus industriel, un ensemble de serveurs, d'applications ou d'équipements au sein d'un centre de données), certaines anomalies peuvent causer de graves problèmes d'exploitation par exemple par un effet de cascade. Or, il est nécessaire de pouvoir exploiter au mieux les différentes sources de données pour ne pas manquer un signal faible provenant d'un flux de données d'un fournisseur particulier qui n'aurait pas été convenable traité.

L'invention porte donc sur un **système 10 de traitement des données pour la préparation d'un jeu de données.** Le jeu de données pourra en particulier être mis en œuvre au sein d'un modèle d'apprentissage automatique pouvant être utilisé pour la surveillance d'un processus industriel.

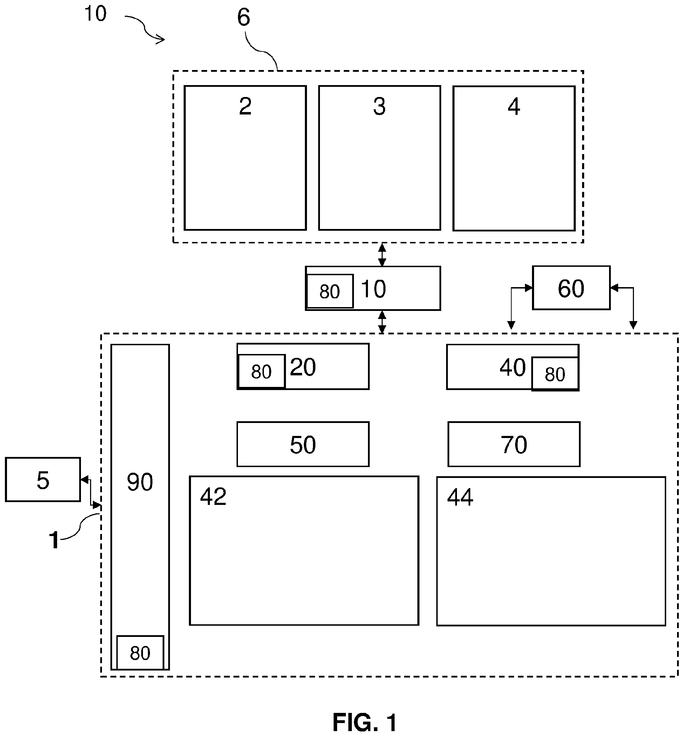

En particulier, comme cela est illustré à la figure 1, le système 10 de traitement de données pour la préparation d'un jeu de données comprend un dispositif informatique comprenant une unité de traitement de données 1, et un groupe de modules interconnectés de traitement.

L'unité de traitement de données 1 est comprise dans un dispositif informatique qui pourra avantageusement être adapté pour interagir ou s'intégrer à une infrastructure informatique telle qu'un système de calculateurs hautes performances ou plus généralement à tout système comprenant un ou plusieurs flux d'entrée de données pouvant être analysés pour déterminer des fonctions mathématiques ou algorithmes permettant d'interpréter les données du flux de données.

En outre l'unité de traitement de données 1 comprend un groupe de module interconnectés de traitement configurés pour analyser le ou les flux de données et pour préparer, à partir du ou desdits flux de données, un jeu de données 5 en sortie de l'unité de traitement de données 1.

Comme il apparaitra dans la description, les modules interconnectés peuvent être configurés pour mettre en œuvre des fonctions diverses permettant *in fine,* c'est-à-dire en sortie de l'unité de traitement de données 1, d'obtenir un jeu de données différent du jeu de données d'entrée et adapté pour l'entraînement d'un modèle de prédiction via des techniques d'apprentissage supervisé ou non supervisé. En outre, le procédé de traitement pourra transmettre en continue le jeu de données prétraitées à un modèle d'apprentissage automatique qui sera charger à partir de ce jeu de données prétraitées de surveiller un processus industriels. De façon préférée, dans le cadre d'un procédé selon l'invention, la transmission du jeu de données prétraitées au modèle d'apprentissage automatique se fait en temps réel. En particulier, partant de la réception de la pluralité de flux de données, un procédé selon l'invention comprend de préférence la génération d'un jeu de donnée prétraitée, et de préférence la transmission au modèle d'apprentissage automatique, dans un délai inférieur ou égale à dix minutes, de façon plus préférée inférieur ou égale à cinq minutes, de façon encore plus préférée inférieur ou égale à une minute.

En outre, dans le cadre d'un procédé selon l'invention, les flux d'entrée de donnée sont de préférence traités en continu. Le suivi en continu correspond par exemple à des mesures ou des traitements réalisés à une fréquence inférieure ou égale à une heure, de préférence inférieure ou égale à trente minutes, de façon plus préférée inférieure ou égale à cinq minutes, par exemple inférieure ou égale à dix secondes. A noter que tous les flux de données ne seront pas nécessairement mesurés ou traités à une fréquence identique.

Notamment, le groupe de module interconnectés de traitement comprend un module d'analyse descriptive de données 20 et un module de traitement de données 40.

Le module d'analyse descriptive de données 20 permet de normaliser la pluralité des flux d'entrée de données 2,3,4 à l'entrée de l'unité de traitement 1. La normalisation des données permet de disposer de données standardisées, notamment par la mise en œuvre d'algorithmes permettant de centrer et réduire les données afin que celles-ci puissent être utilisées *a posteriori* dans le cadre de techniques d'apprentissage supervisé ou non supervisé. Ainsi cela permet le traitement et la comparaison des variables présentes dans les données des flux d'entrée de données 2,3,4.

Le module d'analyse descriptive de données 20 est en outre configuré pour transformer la pluralité de flux d'entrée de données normalisées en une pluralité de flux d'entrée de données normalisées et chiffrées. Pour cela, le module d'analyse descriptive de données 20 est configuré pour mettre en œuvre des algorithmes d'encodage permettant notamment de traiter des variables catégorielles. A titre d'exemples illustratifs, un algorithme d'encodage peut correspondre à un algorithme d'encodage de type « one-hot » qui consiste à encoder une variable à n états sur n bits dont un seul prend la valeur 1, le numéro du bit valant 1 étant le numéro de l'état pris par la variable, ou encore de type « label encoding » permettant de représenter les n états des variables catégorielles en n états numériques de 1 à n.

Le module de traitement de données 40 est quant à lui configuré pour compléter le jeu de données à partir de la pluralité de flux d'entrée de données normalisées et chiffrées. En effet, afin de générer un jeu de données en sortie de qualité, c'est-à-dire permettant de construire un modèle de prédiction robuste, le module de traitement de données 40 est configuré pour procéder à une augmentation de données pour la complétion des données manquantes en prenant en compte la cohérence des données normalisées et chiffrées.

En effet, les données normalisées et chiffrées peuvent correspondre à des données structurées ou non structurées (i.e des images). En fonction du type de données normalisées et chiffrées, différentes techniques pourront être mises en œuvre par le module de traitement de données 40 afin de compléter les données manquantes. Pour cela, le module de traitement de données 40 est configuré pour prendre en compte la cohérence des données normalisées et chiffrées avec des tables 42 de corrélation prédéfinies, et pour déterminer à partir desdites tables 42 de corrélation un traitement à appliquer aux données normalisées et chiffrées afin de compléter les données manquantes. A titre d'exemples illustratifs, le module de traitement de données 40 peut mettre en œuvre des techniques de remplacement de données manquantes par la moyenne, par la médiane, par l'état le plus fréquent notamment dans le cas d'une variable catégorielle, par interpolation ou encore via des techniques de reconstruction pour les données non structurées telles que les images ou les vidéos.

Afin d'obtenir un jeu de données en sortie 5 permettant de caractériser le plus fidèlement possible un comportement « normal » des données. En effet, le module de traitement de données 40 est configuré pour détecter les données aberrantes et les supprimer afin de fournir un jeu de données en sortie 5 représentant un comportement « normal » et qui pourra servir de base pour la génération d'un modèle de prédiction. Par exemple, dans le cadre de l'application à des systèmes de calcul haute performance, un comportement normal pourra être associé au fonctionnement du système dans lequel aucun des indicateurs de performance n'est en anomalie.

Pour détecter de telles données aberrantes, le module de traitement de données 40 est configuré pour traiter les données normalisées et chiffrées par des fonctions 44. Les fonctions 44 peuvent comprendre une pluralité de fonctions différentes permettant la détection de données aberrantes telles que :
- l'utilisation d'une fonction de répartition, ce qui permet la prise en compte des données comme « outliers » celles dont les valeurs sont supérieures à un seuil maximum et inférieures à un seuil minimum prédéterminés.
- l'utilisation d'un algorithme de type « boxplot » ou boites à moustache, seules les valeurs sur l'intervalle : [Q1 - 1.5EI ; Q3 + 1.5EI] où Q1, Q3 et EI sont respectivement le premier quartile, le troisième et l'interquartile.
- l'utilisation d'un algorithme de type « Local outlier factor » ou calcul de densité locale basée sur les k-plus proches voisins, permettant de donner un score à chacun des points en fonction de son accessibilité à partir de ses voisins.
- l'utilisation d'un algorithme de partitionnement de type "DBSCAN" pour Density Based Spatial Clustering of Applications with Noise selon une terminologie anglo-saxonne.
- l'utilisation d'un algorithme mettant en œuvre le test Tau de Thompson.

Le module de traitement de données 40 est en outre configuré pour vérifier l'adéquation de la pluralité de flux d'entrées de données traitées avec les fonctions 44 prédéterminées. En effet, il convient de déterminer si l'augmentation de données pour la complétion des données manquantes ainsi que l'utilisation des fonctions permettent d'expliquer / d'interpréter le comportement des données normalisées et chiffrées afin de pouvoir générer à partir de ces données un modèle de prédiction robuste.

Pour cela, le module de traitement de données 40 est configuré pour fournir une représentation des données normalisées et chiffrées par des fonctions caractérisées par des lois de probabilités continues symétriques, continues asymétriques et discrète. Pour chacune de ces lois de probabilité, le module de traitement de données 40 est configuré pour calculer un indice d'adéquation des données normalisées et chiffrées via la mise en œuvre de tests d'adéquation tels que le test d'Anderson-Darling, le test de Cramer Von Mises, le test de Kolmogorov-Smirnov ou encore le test du Chi².

Pour chaque loi de probabilité utilisée, un indice d'adéquation compris entre 0 (indiquant aucune adéquation) et 1 (indiquant une adéquation) est calculé pour chaque test d'adéquation. De manière avantageuse, de telles données peuvent être affichées via une interface homme-machine, tel qu'un écran permettant ainsi de fournir à l'utilisateur, pour chaque variable présente dans les données normalisées et chiffrées un tableau comprenant les indices d'adéquation par variable en fonction de la loi de probabilité considérée et par test d'adéquation. Pour cela, de manière avantageuse l'unité de traitement de données 1 peut comprendre un module de communication 70, configuré pour transmettre les informations en lien avec le traitement de données normalisées et chiffrées à l'utilisateur via une interface homme-machine associé à un dispositif informatique.

Afin de sélectionner la fonction 44 prédéterminée la plus pertinente pour la représentation d'un flux de données de la pluralité de flux d'entrée de données à partir des données normalisées et chiffrées, le module de traitement de données 40 peut être configuré pour sélectionner la fonction 44 prédéterminée pour laquelle l'adéquation, entre ladite fonction prédéterminée et un flux de données, présente la divergence la plus faible. Comme décrit précédemment, pour chaque loi de probabilité utilisée, un indice d'adéquation compris entre 0 (indiquant aucune adéquation) et 1 (indiquant une adéquation) est calculé pour chaque test d'adéquation. Dans un mode de réalisation particulier, le module de traitement de données 40 peut être configuré pour sélectionner la fonction 44 prédéterminée présentant une moyenne d'adéquation calculée à partir de la somme des indices d'adéquation des données normalisées et chiffrées, pour chaque fonction 44, la plus proche de 1. Cela permet ainsi la sélection de la fonction 44 représentant le plus fidèlement le flux d'entrée de données.

Alternativement, le module de traitement de données 40 peut être configuré pour sélectionner la fonction 44 prédéterminée présentant le plus grand nombre d'indices d'adéquation des données normalisées et chiffrées supérieurs à un seuil d'adéquation prédéterminé.

Le module de traitement de données 40 peut en outre être configuré pour classifier les données manquantes générées lors de l'augmentation de données et notamment les enregistrer dans une mémoire de données idoine du dispositif informatique comprenant l'unité de traitement de données 1. De manière avantageuse, le module de traitement de données 40 pourra être configuré pour indiquer si l'algorithme, ou le traitement, utilisé pour compléter les données manquantes a permis la vérification d'une adéquation entre des données de remplacement générées et une fonction 44 prédéterminée.

En fonction du type de données normalisées et chiffrées, différentes techniques pourront être mises en œuvre par le module de traitement de données 40 afin de compléter les données manquantes. Pour cela, le module de traitement de données 40 est configuré pour prendre en compte la cohérence des données normalisées et chiffrées avec des tables 42 de corrélation prédéfinies, et pour déterminer, à partir desdites tables 42 de corrélation, un traitement à appliquer aux données normalisées et chiffrées afin de compléter les données manquantes. A titre d'exemples illustratifs, le module de traitement de données 40 peut mettre en œuvre des techniques de remplacement de données manquantes par la moyenne, par la médiane, par l'état le plus fréquent notamment dans le cas d'une variable catégorielle, par interpolation ou encore via des techniques de reconstruction pour les données non structurées telles que les images ou les vidéos.

De manière avantageuse, de telles données peuvent être affichées via une interface homme-machine, tel qu'un écran permettant ainsi de fournir à l'utilisateur, pour chaque variable présente dans les données normalisées et chiffrées un tableau comprenant les indices d'adéquation par variable en fonction de la loi de probabilité considérée et par test d'adéquation. Pour cela, de manière avantageuse l'unité de traitement de données 1 peut comprendre un module de communication 70, configuré pour transmettre les informations en lien avec le traitement de données normalisées et chiffrées à l'utilisateur via une interface homme-machine associé à un dispositif informatique.

En outre, le groupe de module interconnectés de traitement peut comprendre un module d'injection de données 60 compris ou non dans l'unité de traitement de données 1. Un tel module a pour fonction principale de réinjecter les données normalisées et chiffrées afin que celles-ci soient à nouveau traitées par le module de traitement de données 40.

De plus, le groupe de module interconnectés de traitement peut comprendre un module 10 de commande d'entrée configuré pour acquérir chaque flux d'entrée de données de la pluralité de flux d'entrée de données 2,3,4 à partir d'un magasin 6 de stockage de données, dont le format est immédiatement utilisable par l'unité de traitement de données 1.

Dans un mode de réalisation particulier, le dispositif informatique peut en outre comprendre une mémoire de données de format couplée à l'unité de traitement de données 1 pour stocker un ensemble de formats définis et un ensemble de règles déterminant comment les données sont formatées à partir des formats de données stockés en mémoire.

En particulier, la présente invention porte sur **un système de traitement des données** pour la préparation d'un jeu de données mis en œuvre par une ressource de calcul de type ordinateur, comprenant une unité de traitement de données, ladite unité de traitement de données recevant une première pluralité de flux d'entrée de données provenant de fournisseur de données différents, et comprenant un groupe de module interconnectés de traitement que traverse la première pluralité de flux de données pour préparer le jeu de données en sortie, la pluralité de flux d'entrée de données et le jeu de données en sortie étant différent, ledit système comprenant :
- Un module d'analyse descriptive de données, configuré pour
   ∘ à partir de la pluralité de flux d'entrée de données, standardiser les données à l'entrée de l'unité de traitement, et
   ∘ transformer la pluralité de flux d'entrée de données normalisées en une pluralité de flux d'entrée de données normalisées et chiffrées,
- Un module de traitement de données, configuré pour, à partir de la pluralité de flux d'entrée de données normalisées et chiffrées, traiter des données manquantes, permettant de remplacer les données manquantes
- Un moyen d'éjection de données configuré pour sortir le jeu de données à partir de la pluralité de flux d'entrée de données traitées de l'unité de traitement de données.

L'invention porte en outre sur **une unité de traitement de données** pour la préparation d'un jeu de données mis en œuvre par une ressource de calcul de type ordinateur, comprenant une première pluralité de flux d'entrée de données provenant de fournisseur de données différents, et comprenant un groupe de module interconnectés de traitement que traverse la première pluralité de flux de données pour préparer le jeu de données en sortie, la pluralité de flux d'entrée de données et le jeu de données en sortie étant différent, ladite unité de traitement comprenant :
- Un module d'analyse descriptive de données, configuré pour
   ∘ à partir de la pluralité de flux d'entrée de données, standardiser les données à l'entrée de l'unité de traitement, et
   ∘ transformer la pluralité de flux d'entrée de données normalisées en une pluralité de flux d'entrée de données normalisées et chiffrées,
- Un module de traitement de données, configuré pour, à partir de la pluralité de flux d'entrée de données normalisées et chiffrées, traiter des données manquantes, permettant de remplacer les données manquantes,
- Un moyen d'éjection de données configuré pour sortir le jeu de données à partir de la pluralité de flux d'entrée de données traitées de l'unité de traitement de données.

L'invention porte en outre sur un **procédé 100 de traitement de données pour la préparation d'un jeu de données.**

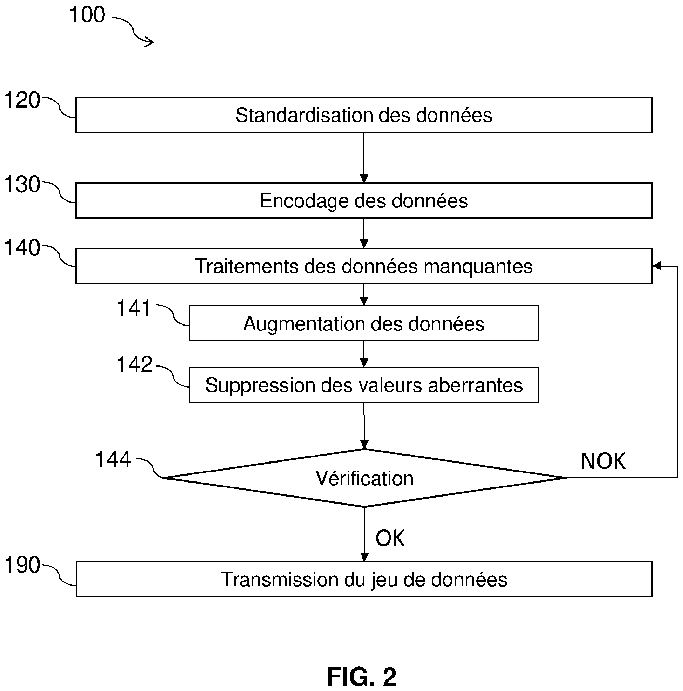

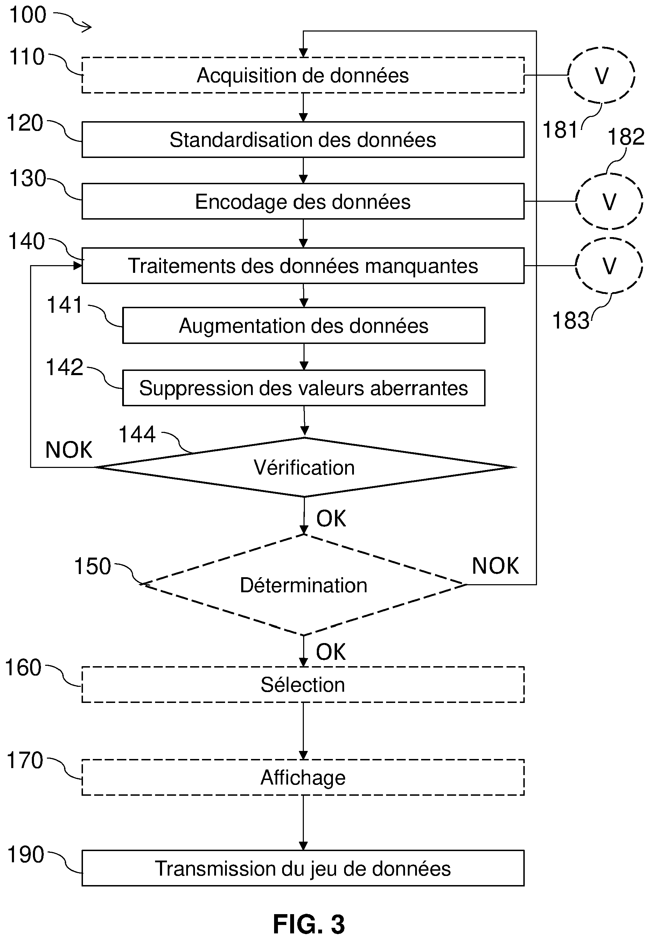

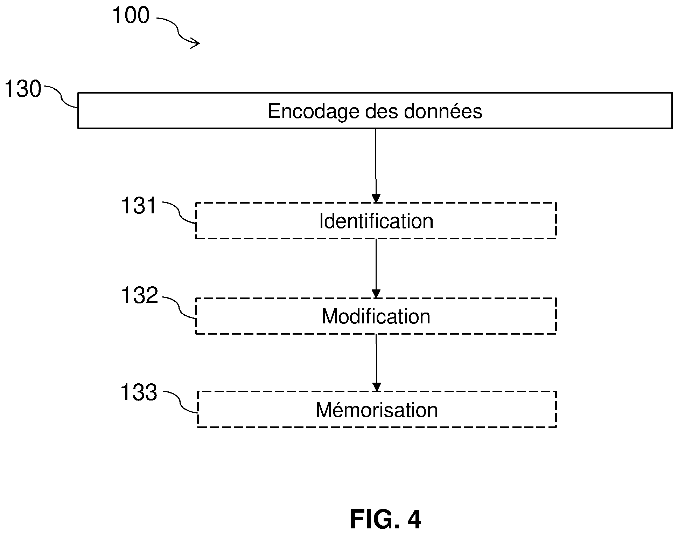

En particulier, comme cela est illustré à la figure 2, le procédé 100 de traitement de données est mis en œuvre par un dispositif informatique comprenant une unité de traitement de données 1 comme décrit en lien avec les figures 2 à 4.

Lors de la réception par l'unité de traitement de données d'une pluralité de flux d'entrée de données 2,3,4 provenant de fournisseurs de données différents, le procédé 100 de traitement de données peut mettre en œuvre une étape de standardisation 120 de la pluralité de flux d'entrée de données 2,3,4, par un module d'analyse descriptive de données 20, à partir de la pluralité de flux d'entrée de données, permettant de normaliser les données à l'entrée de l'unité de traitement 1. Cette étape de standardisation pourra ne concerner qu'une partie des flux de données. En effet il est possible que certaines données ne nécessitent pas de standardisation. A titre d'exemples non limitatifs, la pluralité de flux de données 2,3,4 peut correspondre à des indicateurs de performance d'une infrastructure informatique de calcul haute performance tels que : l'utilisation des ressources, les historique des événements, les erreurs logicielles, les erreurs matérielles, les temps de réponse, le trafic des applications, la charge de service, le trafic réseau, des modifications de fichiers, le nombre d'utilisateurs d'un service, le nombre de session, le nombre de processus, des valeurs de températures, des valeurs d'hygrométrie, et la consommation électrique. En particulier, les indicateurs de performance peuvent inclure : le débit du réseau, la latence du réseau, l'utilisation de CPU, l'utilisation de mémoire, le temps de réponse du serveur, le nombre de pages lentes et/ou le nombre de transactions.

Un procédé conforme à l'invention comprend une étape d'encodage 130 des données normalisées, par le module 20 d'analyse descriptive des données, permettant de transformer la pluralité de flux d'entrée de données normalisées en une pluralité de flux d'entrée de données normalisées et chiffrées.

En effet, la pluralité de flux d'entrée de données 2,3,4 provient généralement de différentes sources de données. Notamment, la pluralité de flux d'entrée de données 2,3,4 peut comporter des valeurs des indicateurs de performance pouvant être générées par des sondes informatiques dédiées à la surveillance d'indicateurs de performance d'une infrastructure informatique. Ainsi, le procédé peut être réalisé au moins en partie à partir de valeurs d'indicateurs de performance générées par des sondes dédiées à la surveillance d'indicateurs de performance de l'infrastructure informatique.

Le procédé comprend en outre une étape de prétraitement 140 du jeu de données, de préférence de données manquantes, par un module 40 de traitement de données, à partir de la pluralité de flux d'entrée de données normalisées et chiffrées.

En particulier, l'étape de traitement peut comporter une étape d'augmentation des données 141 pour la complétion des données manquantes prenant en compte la cohérence des données normalisées et chiffrées avec des tables 42 de corrélation prédéfinies.

L'étape de détermination peut aussi comporter une étape de détection de valeurs aberrantes de la pluralité de flux d'entrée de données normalisées et chiffrées, par le traitement desdites données normalisées et chiffrées par des fonctions 44 prédéterminées. En particulier, le procédé pourra comporter une étape de suppression 142 des valeurs aberrantes et de façon préférée une étape de remplacement des valeurs aberrantes par des données de remplacement.

En particulier, l'étape de traitement peut comporter une étape de vérification 144 de l'adéquation de la pluralité de flux d'entrées de données traitées avec les fonctions 44 prédéterminées, ladite étape de vérification comprenant la rétroaction par le module 40 de traitement de données pour prendre des actions visant à injecter à nouveau la pluralité de flux d'entrée de données traitées dans le module 40 de traitement de données lorsque l'adéquation de la pluralité de flux d'entrées de données traitées avec les fonctions 44 prédéterminées est divergente.

En outre, un procédé selon l'invention pourra comporter une étape de transmission d'un jeu de données prétraitées, ledit jeu de données comportant des données normalisées et chiffrées ainsi que de nouvelles données générées lors de l'étape d'augmentation des données et de préférence de nouvelles données venant en remplacement de valeurs aberrantes. Une telle transmission pourra être réalisée par un processeur à destination d'une mémoire pour du stockage ou par un module de communication à un autre dispositif sur le même réseau ou sur un autre réseau. Par exemple, un procédé selon l'invention pourra comporter une étape de transmission 190, de la pluralité de flux d'entrée de données traitées de l'unité de traitement de données, du jeu de données par un moyen 90 d'éjection de données.

En effet, bien souvent dans le cadre des processus industriels, gérés ou non via des infrastructures informatique la pluralité de flux d'entrée de données 2,3,4 peut comprendre des données de nature bien différente, ces données peuvent notamment être des données structurées ou bien non structurées. C'est notamment le cas lorsque le processus industriel implique des infrastructures de calcul haute performance. En outre, bien souvent les données peuvent être insuffisantes pour permettre leur utilisation dans l'établissement d'un modèle de prédiction et devront faire l'objet d'une étape d'augmentation de données afin de permettre leur exploitation en sortie.

De manière avantageuse, l'étape 130 d'encodage des données peut comprendre :
- l'identification 131 des données à encoder,
- la modification 132 des données identifiées en données encodées, et/ou
- la mémorisation 133 des données encodées.

En outre, l'étape de prétraitement 140 du jeu de données, peut comprendre en outre une étape 143 de classification des données manquantes, par le module 40 de traitement de données.

Le procédé peut comprendre une étape 150 de détermination de la qualité des données du jeu de données, comprenant la détermination d'un indicateur de fiabilité et d'un indicateur de validité, par un moyen 50 systématique de transformation. En effet, lors de l'augmentation des données ou encore lors de leur standardisation, les algorithmes utilisés pour effectuer de telles étapes peuvent ne pas être adaptés. Une telle étape 150 de détermination de la qualité de données permet ainsi d'estimer si les étapes préalables de standardisation d'encodage ou encore d'augmentation de données ont permis la génération d'un jeu de données potentiellement utilisables pour l'élaboration d'un modèle de prédiction.

De manière avantageuse, lorsque l'indicateur de fiabilité et l'indicateur de validité sont respectivement inférieurs à une valeur prédéterminée, les données du jeu de données peuvent être réinjectées dans l'unité de traitement de données 1, par un module d'injection de données 60. Cela permet ainsi de réitérer les étapes de standardisation des données, d'encodage des données 130 et de prétraitements du jeu de données 140 jusqu'à l'obtention d'un jeu de données potentiellement utilisables pour l'élaboration d'un modèle de prédiction.

Un procédé conforme à l'invention peut comprendre une étape préalable d'acquisition 110 de chaque flux d'entrée de données de la pluralité de flux d'entrée de données 2,3,4, par un module 10 de commande d'entrée, à partir d'un magasin 6 de stockage de données, dont le format est immédiatement utilisable par l'unité de traitement de données 1. Cela permet de limiter la dégradation du jeu de données lors des étapes de standardisation, d'encodage ou encore d'augmentation de données.

Le procédé selon l'invention peut en outre comprendre une étape d'affichage 170, par un module 70 de communication, des étapes du traitement de données, des corrélations de données, des fonctions prédéterminées sélectionnées, de la cohérence des données avec les tables de corrélations prédéfinies, de l'adéquation de la pluralité de flux d'entrées de données traitées avec des fonctions prédéterminées. En effet, il peut être avantageux que l'utilisateur puisse avoir accès à ces informations, notamment par l'intermédiaire d'une interface homme-machine d'un dispositif informatique associé.

Un procédé conforme à l'invention peut comprendre en outre une étape de vérification 181,182,183 selon un ensemble de règles déterminées, à la sortie de modules interconnectés de traitement que traverse la pluralité de flux de données pour préparer le jeu de données, comprenant des filtres 80, chacun étant prévu à la sortie de modules interconnectés de traitement.

Le procédé selon l'invention peut également comprendre une étape de sélection 160 d'une fonction prédéterminée pour laquelle l'adéquation, entre ladite fonction prédéterminée et un flux de données de la pluralité de flux d'entrée de données, présente la divergence la plus faible, par le module 40 de prétraitement de données.

L'invention peut en particulier porter sur **un procédé de traitement des données** pour la préparation d'un jeu de données mis en œuvre par une ressource de calcul de type ordinateur, comprenant une unité de traitement de données, ladite unité de traitement de données recevant une première pluralité de flux d'entrée de données provenant de fournisseur de données différents, et comprenant un groupe de module interconnectés de traitement que traverse la première pluralité de flux de données pour préparer le jeu de données en sortie, la pluralité de flux d'entrée de données et le jeu de données en sortie étant différent.

Le procédé pourra comporter une étape de standardisation de la pluralité de flux d'entrée de données, par un module d'analyse descriptive de données, à partir de la pluralité de flux d'entrée de données, permettant de normaliser les données à l'entrée de l'unité de traitement. Le procédé pourra comporter une étape d'encodage des données normalisées, par le module d'analyse descriptive des données, permettant de transformer la pluralité de flux d'entrée de données normalisées en une pluralité de flux d'entrée de données normalisées et chiffrées. Le procédé pourra comporter une étape de traitement des données manquantes, par un module de traitement de données, à partir de la pluralité de flux d'entrée de données normalisées et chiffrées permettant de remplacer les données manquantes comprenant :
∘ Une étape de détection des valeurs aberrantes de la pluralité de flux d'entrée de données normalisées et chiffrées par comparaison à des fonctions prédéterminées en fonction de seuils prédéterminés minimum et maximum,
∘ Une étape d'interpolation pour la complétion des données manquantes prenant en compte la cohérence des données avec des tables de corrélation prédéfinies,
∘ Une étape de vérification de l'adéquation de la pluralité de flux d'entrées de données traitées avec des fonctions prédéterminées comprenant la rétroaction pour le module de traitement de données pour prendre des actions visant à injecter à nouveau la pluralité de flux d'entrée de données traitées dans le module de traitement de données lorsque l'adéquation de la pluralité de flux d'entrées de données traitées avec les fonctions prédéterminées est divergente.

Le procédé pourra comporter une étape de sortie, de la pluralité de flux d'entrée de données traitées de l'unité de traitement de données, du jeu de données par un moyen d'éjection de données.

L'invention concerne également une évaluation d'un jeu de données initial et optionnellement de préparation d'un jeu de données amélioré à partir du jeu de données initial. Un tel procédé peut être mis en œuvre par une ressource de calcul de type ordinateur, comprenant une unité de traitement de données, ladite unité de traitement de données comprenant un module d'analyse descriptive de données, un module d'analyse et recevant un jeu de données initial provenant d'un fournisseur de données, ledit jeu de données initial comportant plusieurs sous ensemble de données.

Le procédé selon l'invention pourra comporter une étape de standardisation du jeu de données, par un module d'analyse descriptive de données, ladite étape comportant ou pouvant correspondre à la normalisation de chacun des sous-ensembles de données du jeu de données initial.

Le procédé selon l'invention pourra aussi comporter une étape optionnelle d'encodage des données normalisées, par le module 20 d'analyse descriptive des données, ladite étape comportant la transformation des sous-ensembles de données non chiffrées en sous-ensembles de données chiffrées.

Le procédé selon l'invention pourra aussi comporter une étape d'analyse des données, par un module d'analyse, comprenant :
- Une étape de détection des valeurs aberrantes, ladite étape comportant la comparaison de chacun des sous-ensembles de données normalisées à des fonctions de distribution prédéterminées,
- Une étape de vérification d'adéquation, ladite étape comportant le calcul de plusieurs indices de corrélation pour chacun des sous-ensembles de données avec les fonctions de distribution prédéterminées.

Le procédé selon l'invention pourra aussi comporter une étape de génération d'une évaluation des données, par un module d'évaluation, ladite étape comportant la comparaison des indices de corrélation pour chacun des sous-ensembles de données et l'identification, pour chacun des sous-ensembles de données, des fonctions de distribution prédéterminées permettant une corrélation supérieure à un seuil prédéterminé.

## Revendications

1. Procédé (100) de traitement de données pour la préparation d'un jeu de données mis en œuvre par un dispositif informatique comprenant une unité de traitement de données (1), ladite unité de traitement de données recevant une pluralité (2,3,4) de flux d'entrée de données provenant de fournisseurs de données différents, et comprenant un groupe de module interconnectés de traitement que traverse la première pluralité de flux de données pour préparer le jeu de données (5) en sortie,
la pluralité de flux d'entrée de données et le jeu de données en sortie étant différent, ledit procédé comprenant :
- Une étape de standardisation (120) de la pluralité (2,3,4) de flux d'entrée de données, par un module (20) d'analyse descriptive de données, à partir de la pluralité de flux d'entrée de données, permettant de normaliser les données à l'entrée de l'unité de traitement (1),
- Une étape d'encodage (130) des données normalisées, par le module (20) d'analyse descriptive des données, permettant de transformer la pluralité de flux d'entrée de données normalisées en une pluralité de flux d'entrée de données normalisées et chiffrées,
- Une étape de prétraitement (140) du jeu de données, par un module (40) de traitement de données, à partir de la pluralité de flux d'entrée de données normalisées et chiffrées, ladite étape de prétraitement comprenant :
∘ Une étape d'augmentation des données (141) pour la complétion des données manquantes prenant en compte la cohérence des données normalisées et chiffrées avec des tables (42) de corrélation prédéfinies,
∘ Une étape de suppression (142) de valeurs aberrantes de la pluralité de flux d'entrée de données normalisées et chiffrées, par le traitement par des fonctions (44) prédéterminées desdites données normalisées et chiffrées,
∘ Une étape de vérification (144) de l'adéquation de la pluralité de flux d'entrées de données traitées avec les fonctions (44) prédéterminées, ladite étape de vérification comprenant la rétroaction par le module (40) de traitement de données pour prendre des actions visant à injecter à nouveau la pluralité de flux d'entrée de données traitées dans le module (40) de traitement de données lorsque l'adéquation de la pluralité de flux d'entrées de données traitées avec les fonctions (44) prédéterminées est divergente,
- Une étape de transmission (190) d'un jeu de données prétraitées, ledit jeu de données comportant des données normalisées et chiffrée ainsi que de nouvelles données générées lors de l'étape d'augmentation des données et de préférence de nouvelles données venant en remplacement de valeurs aberrantes.

2. Procédé (100) de traitement de données selon la revendication 1 **caractérisé en ce que** les fournisseurs de données comportent des capteurs de production industrielle et le jeu de données prétraitées est utilisé par un modèle d'apprentissage automatique entrainé pour la surveillance d'un processus industriel.

3. Procédé (100) de traitement de données selon la revendication 2 **caractérisé en ce que** les capteurs de production industrielle comportent : des objets connectés, des capteurs machines, capteurs d'environnement et/ ou des sondes informatiques.

4. Procédé (100) de traitement de données selon l'une des revendications 2 ou 3 **caractérisé en ce que** le processus industriel est sélectionné parmi : un processus de production agroalimentaire, un processus de production manufacturière, un processus de synthèse chimique, un processus de conditionnement ou un processus de surveillance d'une infrastructure informatique.

5. Procédé (100) de traitement de données selon l'une quelconque des revendications 2 à 4, **caractérisé en ce que** la surveillance du processus industriel correspond à la surveillance de la sécurité du processus industriel et comporte en particulier une maintenance prédictive, une détection de défaillance, une détection de fraude, et/ou une détection de cyberattaque.

6. Procédé (100) de traitement de données selon l'une quelconque des revendications 1 à 5 **caractérisé en ce qu'**il comporte une étape de modification automatique des fonctions (44) prédéterminées et/ou des tables (42) de corrélation prédéfinies, respectivement utilisées pour les étapes de suppression (142) de valeurs aberrantes et d'augmentation (141) des données.

7. Procédé (100) de traitement de données selon l'une quelconque des revendications 1 à 6 **caractérisé en ce que** le jeu de donnée prétraité est utilisé comme données d'entrée d'un modèle d'apprentissage entrainé pour la surveillance d'un processus industriel et **en ce que** l'étape de modification automatique est initiée lorsqu'une variance est identifiée dans la pluralité (2,3,4) de flux d'entrée de données.

8. Procédé selon l'une quelconque des revendications 1 à 7, **caractérisé en ce que** lorsque l'indicateur de fiabilité et l'indicateur de validité sont respectivement inférieurs à une valeur prédéterminée, les données du jeu de données sont réinjectées dans l'unité de traitement de données (1), par un module d'injection de données (60).

9. Procédé selon l'une quelconque des revendications 1 à 8, **caractérisé en ce que** le procédé comprend en outre une étape préalable d'acquisition (110) de chaque flux d'entrée de données, par un module (10) de commande d'entrée, à partir d'un magasin (6) de stockage de données, dont le format est immédiatement utilisable par l'unité de traitement de données (1).

10. Procédé selon l'une quelconque des revendications 1 à 9, **caractérisé en ce que** le procédé comprend en outre une étape d'affichage (170), par un module (70) de communication, des étapes du traitement de données, des corrélations de données, des fonctions prédéterminées sélectionnées, de la cohérence des données avec les tables de corrélations prédéfinies, de l'adéquation de la pluralité de flux d'entrées de données traitées avec des fonctions prédéterminées.

11. Procédé selon l'une quelconque des revendications 1 à 10, **caractérisé en ce que** le procédé comprend en outre une étape de sélection (160) d'une fonction prédéterminée pour laquelle l'adéquation, entre ladite fonction prédéterminée et un flux de données de la pluralité de flux d'entrée de données, présente la divergence la plus faible, par le module (40) de prétraitement de données.

12. Procédé selon l'une quelconque des revendications 1 à 11, **caractérisé en ce qu'**il comporte en outre une étape de génération d'une évaluation des données, par un module d'évaluation, ladite étape comportant la comparaison d'indices de corrélation pour chacun des sous-ensembles de données et l'identification, pour chacun des sous-ensembles de données, des fonctions de distribution prédéterminées permettant une corrélation supérieure à un seuil prédéterminé.

13. Procédé selon l'une quelconque des revendications 1 à 12, **caractérisé en ce que** l'étape (130) d'encodage des données comprend :
- l'identification (131) des données à encoder,
- la modification (132) des données identifiées en données encodées, et
- la mémorisation (133) des données encodées.

14. Système (10) de traitement des données pour la préparation d'un jeu de données mis en œuvre par un dispositif informatique, recevant une pluralité (2,3,4) de flux d'entrée de données provenant de fournisseurs de données différents, le dispositif informatique comprenant une unité de traitement de données (1) et comprenant un groupe de module interconnectés de traitement que traverse la première pluralité de flux de données pour préparer le jeu de données (5) en sortie, la pluralité de flux d'entrée (2,3,4) de données et le jeu de données en sortie étant différents, ladite unité de traitement de données (1) comprenant :
- Un module d'analyse descriptive de données (20), configuré pour
- à partir de la pluralité de flux d'entrée de données, standardiser les données à l'entrée de l'unité de traitement, et
- transformer la pluralité de flux d'entrée de données normalisées en une pluralité de flux d'entrée de données normalisées et chiffrées,
- Un module (40) de prétraitement du jeu de données, configuré pour, à partir de la pluralité de flux d'entrée de données normalisées et chiffrées :
- la complétion des données manquantes prenant en compte la cohérence des données normalisées et chiffrées avec des tables (42) de corrélation prédéfinies,
- supprimer de valeurs aberrantes de la pluralité de flux d'entrée de données normalisées et chiffrées, par le traitement par des fonctions (44) prédéterminées desdites données normalisées et chiffrées,
- vérifier l'adéquation de la pluralité de flux d'entrées de données traitées avec les fonctions (44) prédéterminées, prenant des actions visant à injecter à nouveau la pluralité de flux d'entrée de données traitées dans le module (40) de traitement de données lorsque l'adéquation de la pluralité de flux d'entrées de données traitées avec les fonctions (44) prédéterminées est divergente,
- Un moyen de transmission de données configuré pour transmettre le jeu de données prétraité, ledit jeu de données comportant des données normalisées et chiffrées ainsi que de nouvelles données générées et de préférence de nouvelles données venant en remplacement de valeurs aberrantes à partir de la pluralité de flux d'entrée de données traitées par l'unité de traitement de données.

15. Unité (1) de traitement de données pour la préparation d'un jeu de données mis en œuvre par un dispositif informatique, recevant une pluralité de flux d'entrée de données (2,3,4) provenant de fournisseurs de données différents, et comprenant un groupe de module interconnectés de traitement que traverse la pluralité de flux d'entrée de données (2,3,4) pour préparer le jeu de données (5) en sortie, la pluralité de flux d'entrée de données et le jeu de données en sortie étant différents, ladite unité de traitement comprenant :
- Un module d'analyse descriptive de données (20), configuré pour
- à partir de la pluralité de flux d'entrée de données, standardiser les données à l'entrée de l'unité de traitement, et
- transformer la pluralité de flux d'entrée de données normalisées en une pluralité de flux d'entrée de données normalisées et chiffrées,
- Un module (40) de prétraitement du jeu de données, configuré pour, à partir de la pluralité de flux d'entrée de données normalisées et chiffrées :
- la complétion des données manquantes prenant en compte la cohérence des données normalisées et chiffrées avec des tables (42) de corrélation prédéfinies,
- supprimer de valeurs aberrantes de la pluralité de flux d'entrée de données normalisées et chiffrées, par le traitement par des fonctions (44) prédéterminées desdites données normalisées et chiffrées,
- vérifier l'adéquation de la pluralité de flux d'entrées de données traitées avec les fonctions (44) prédéterminées, prenant des actions visant à injecter à nouveau la pluralité de flux d'entrée de données traitées dans le module (40) de traitement de données lorsque l'adéquation de la pluralité de flux d'entrées de données traitées avec les fonctions (44) prédéterminées est divergente,
- Un moyen de transmission de données configuré pour transmettre le jeu de données prétraité, ledit jeu de données comportant des données normalisées et chiffrées ainsi que de nouvelles données générées et de préférence de nouvelles données venant en remplacement de valeurs aberrantes à partir de la pluralité de flux d'entrée de données traitées par l'unité de traitement de données.
